# DEMANDE DE BREVET EUROPEEN

(11) **EP 0 866 350 A1**
(43) Date de publication de la demande: **23.09.1998**
(21) Numéro de dépôt: 98400608.0
(22) Date de dépôt: 16.03.1998
(51) Int. Cl.: G02B 6/44

(54) **Ensemble adaptable de modules plats empilés et articulés**

(30) Priorité: 17.03.1997 FR 9703179
(71) Demandeur: ALCATEL ALSTHOM COMPAGNIE GENERALE D'ELECTRICITE, 75008 Paris (FR)
(72) Inventeur: Cuny, Christian, 91630 Marolles En Hurepoix (FR); Vincent, Alain, 77230 Juilly (FR)
(74) Mandataire: Buffière, Michelle

(57) **Abrégé**

L'ensemble adaptable de modules plats empilés et articulés comporte n modules et un support de maintien et d'articulation desdits modules, ledit support comportant des parties élémentaires successives et des charnières entre elles.

Il est caractérisé en ce que le support (2) est constitué par au moins un support modulaire (5) ayant l'une desdites parties élémentaires (7) à une première de ses extrémités et une partie supplémentaire tronquée (8) prévue à sa deuxième extrémité et encastrable dans la partie élémentaire à la première extrémité d'un autre support modulaire identique.
Application : Ensemble de cassettes optiques

## Description

La présente invention porte sur un ensemble adaptable de modules plats qui sont empilés les uns sur les autres en étant articulés individuellement sensiblement autour de l'un de leurs bords.

Ces modules sont en particulier des cassettes de lovage et/ou de raccordement de fibres optiques. Chacun d'eux est rendu accessible dans l'ensemble par pivotement des modules situés au-dessus de celui concerné, autour de leurs axes individuels d'articulation.

Le document FR-A-2 687 743 décrit un ensemble de tels modules montés sur un support de maintien et d'articulation prévu pour s'étendre sur la hauteur des modules empilés. Ce support comporte des parties élémentaires successives, qui sont identiques les unes aux autres et affectées au maintien des différents modules empilés, et des axes d'articulation qui sont définis entre lesdites parties élémentaires pour les différents modules retenus sur celles-ci. Ces parties élémentaires comportent aussi des butées qui limitent à 90° sensiblement le pivotement des modules les uns par rapport aux autres, autour de leur axe d'articulation.

Dans un premier mode de réalisation décrit dans ce document, le support est une pièce moulée d'un seul tenant, dont les parties élémentaires sont reliées les unes à la suite des autres par des sections d'épaisseur réduite de ce support pour constituer ainsi les axes d'articulation des modules empilés et retenus sur ce support. Un tel support monobloc est conçu pour un nombre donné de modules empilés. Il n'est pas adaptable à un autre nombre de modules et en particulier à un nombre supérieur à ce nombre donné. Les butées sur chacune des parties élémentaires de ce support définissent deux pans inclinés à 45° et sécants, dont l'arête entre eux est parallèle aux axes d'articulation. Ces butées sont saillantes sur la face de la partie élémentaire opposée à celle de maintien de l'un des modules.

Dans un deuxième mode de réalisation décrit dans ce document, les parties élémentaires du support sont initialement indépendantes et sont solidarisées les unes à la suite des autres par deux bandes d'assemblage fixées sur chacune d'elles en définissant les axes d'articulation entre elles. Le support résultant est analogue au support selon le premier mode de réalisation, dans la mesure où il est constitué pour un nombre donné de modules et n'est alors plus adaptable à un nombre différent de modules. Les butées sont analogues à celles du premier mode de réalisation.

Dans un troisième mode de réalisation décrit également dans ce document, les parties élémentaires sont initialement indépendantes et comportent des moyens complémentaires prévus sur chacune d'elles pour leur assemblage et l'obtention simultanée des axes c'articulation. Ces moyens complémentaires sont deux jeux de pattes qui sont transversales à chaque partie élémentaire sur sa face opposée à celle de maintien de l'un des modules et sont munies d'un doigt cylindrique sur l'une des pattes de chaque jeu et d'un trou correspondant sur l'autre. Ils permettent ainsi l'emboîtement des doigts cylindriques prévus sur l'une des parties dans les trous prévus sur une autre d'entre elles, en les assemblant et définissant l'axe d'articulation entre elles. Les butées sont alors formées par au moins un bossage et au moins une empreinte correspondante, qui sont prévus sur les pattes autour du doigt ou du trou, respectivement. Un tel support est adaptable à un nombre variable de modules empilés de l'ensemble, par ajout ou retrait à volonté de parties élémentaires du support. Il n'est cependant pas entièrement satisfaisant sur le plan mécanique, du fait des moyens servant en commun pour l'assemblage des parties élémentaires du support et pour l'articulation des modules et de la réalisation des butées qu'imposent ces moyens.

La présente invention a pour but de tirer parti des avantages de ces différents modes de réalisation précités en évitant leurs inconvénients.

Elle a pour objet un ensemble modulaire de modules plats empilés et articulés, comportant n modules sensiblement identiques et un support de maintien et d'articulation desdits modules, dans lequel le nombre n est un nombre entier supérieur à 1, lesdits modules présentent deux grandes faces d'empilage et des petites faces périphériques et comportent des moyens de rétention prévus sur une première de leurs petites faces, et ledit support présente une longueur au moins égale à la hauteur desdits modules empilés et comporte des parties élémentaires successives et superposées non jointivement, des charnières entre elles, des deuxièmes moyens de rétention complémentaires dits premiers moyens et prévus sur chacune d'elles, pour le maintien de l'un des modules sur une face dite d'assemblage de chaque partie élémentaires, et des butées saillantes sur la face opposée à celle d'assemblage des parties élémentaires, caractérisé en ce que ledit support est constitué par au moins un support modulaire comportant l'une desdites parties élémentaires à une première de ses extrémités et une partie supplémentaire et dite tronquée à sa deuxième extrémité opposée, ladite partie supplémentaire tronquée étant encastrable dans la partie élémentaire de ladite première extrémité d'un autre support modulaire identique.

Cet ensemble peut présenter aussi au moins l'une des caractéristiques additionnelles suivantes :
- lesdites butées sur ladite partie élémentaire de ladite première extrémité de chaque support modulaire sont creuses intérieurement et sont ouvertes sur la face d'assemblage de cette partie élémentaire.
- la partie supplémentaire de chaque support modulaire comporte des plots saillants analogues auxdites butées sur chaque partie élémentaire, mais prévues moins en relief et moins longues que celles-ci.
- lesdites butées comportent des nervures intérieures de rétention par coincement de la partie supplémentaire tronquée dans la partie élémentaire située à la première extrémité de l'autre support modulaire.
- l'ensemble comporte un élément de verrouillage de la partie supplémentaire tronquée dans la partie élémentaire de l'autre support modulaire, ledit élément étant l'un desdits modules maintenu sur la face d'assemblage de cette partie élémentaire.
- l'ensemble comporte un nombre pair de parties élémentaires successives, ce nombre pair étant en particulier 2. Les caractéristiques et avantages de la présente invention ressortiront de la description d'un mode préféré de réalisation illustré dans les dessins ci-annexés. Dans ces dessins :
   - la figure 1 est une vue partielle en perspective d'un ensemble selon l'invention,
   - la figure 2 est une vue en perspective éclatée et de face de supports modulaires constituant un support final dudit ensemble de la figure 1,
   - la figure 3 est une vue analogue à la figure 2 mais de face opposée,
   - la figure 4 est une vue de coupe dudit support final,
   - la figure 5 est une vue en perspective d'une variante de réalisation donnée par rapport à la figure 2.

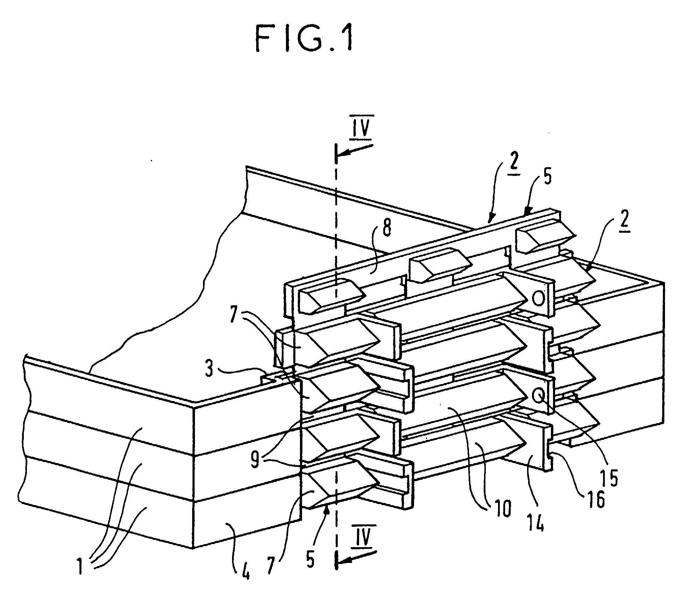

En se référant à la figure 1, on voit que l'ensemble illustré comporte n modules plats 1, identiques et empilés, et un support 2 de maintien et d'articulation de ces modules. Dans cette réalisation n = 3.

Les modules 1 sont de forme globale rectangulaire. Ce sont en particulier des cassettes de lovage et/ou de raccordement de fibres optiques ou peuvent être d'autres articles empilables, dont on permet l'accès à chacun sans défaire l'empilement.

Ces modules ont leurs grandes faces se superposant pour la constitution d'une pile de modules. Des moyens de rétention 3 sont prévus sur une première 4 de leur petites faces périphériques pour le maintien de chaque module sur le support 2. Ces moyens 3 sont constitués par deux cornières qui sont prévues en vis-à-vis sur cette première petite face, symétriquement l'une de l'autre par rapport à l'axe transversal médian de cette face. Ces deux cornières s'étendent sur la largeur de la petite face 4 de chaque module. Elles sont définies entre la portion médiane et les deux portions terminales de cette petite face, ces portions terminales et les cornières les prolongeant légèrement étant saillantes extérieurement sur la portion médiane de cette petite face.

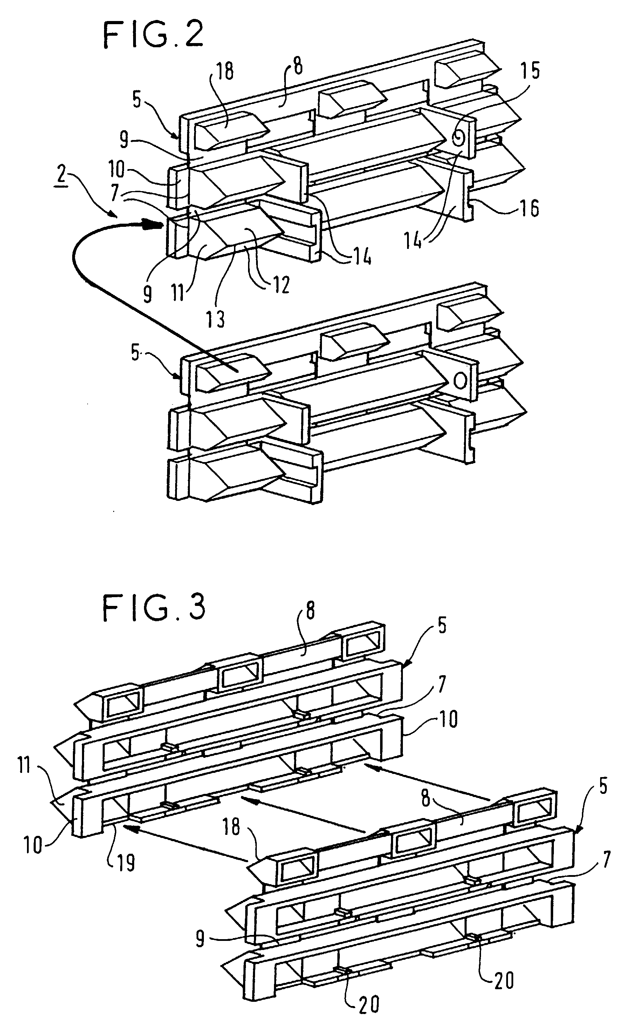

Le support 2 est formé de deux supports modulaires 5 assemblés l'un à l'autre, qui sont illustrés non assemblés dans les figures 2 et 3. Il est de longueur définie, qui est au moins égale à la hauteur de la pile des n modules. Il comporte en conséquence le nombre voulu de supports modulaires pour l'obtention de cette longueur convenable en fonction du nombre n de modules.

En se référant à la figure 1 et plus particulièrement à la figure 2, 3 ou 4, on voit que ces supports modulaires 5 sont identiques, mis à part éventuellement la présence supplémentaire de pattes de fixation à une platine de base qui peuvent être prévues sur le support modulaire inférieur et ne sont pas illustrées dans ces figures. Chacun d'eux est dans cette réalisation prévu pour le maintien et l'articulation de deux des n modules 1.

Chacun des supports modulaires 5 comporte deux parties élémentaires 7 qui sont superposées mais non jointives et sont affectées chacune au maintien de l'un des deux modules 1, l'une de ces parties élémentaires étant terminale. Il comporte une partie supplémentaire 8 et dite tronquée par rapport aux parties élémentaires, qui est terminale à l'opposé de l'une de celles-ci, et deux charnières 9 prévues entre les trois parties superposées en les couplant les unes aux autres. Ces charnières 9 constituent les axes d'articulation des deux modules 1 retenus sur les deux parties élémentaires 7, respectivement. Elles sont définies par des sections d'épaisseur réduite entre les différentes parties 7 et 8. La partie supplémentaire tronquée 8 permet le couplage du support modulaire à un autre support modulaire, par son emboîtement dans la partie élémentaire terminale 7 de cet autre support modulaire.

Chaque partie élémentaire 7 a une forme allongée, parallèlement aux charnières 9. Elle est de longueur égale à la distance entre les deux cornières 3 sur les modules 1. Elle présente deux pattes terminales 10, qui sont reçues et maintenues dans les cornières 10 pour le maintien du module contre l'une des faces dite d'assemblage de la partie élémentaire du support modulaire et du support résultant.

Les parties élémentaires 7 comportent en outre des butées 11, saillantes sur leur face opposée à celle d'assemblage. Ces butées sont creuses intérieurement et ouvertes sur la face d'assemblage. Elles définissent deux pans 12 inclinés à 45° et sécants selon une arête 13 parallèle aux charnières. Ces butées sont discontinues sur la longueur des parties élémentaires 7 et sont divisées sur chacune d'elles en une butée médiane et deux butées latérales. Chaque partie élémentaire comporte en outre des pattes de verrouillage 14 prévues entre la butée médiane et chaque butée latérale. Ces pattes de verrouillage sont complémentaires et légèrement décalées longitudinalement de l'une des deux parties élémentaires à l'autre. Elles sont munies d'un bossage semi-circulaire 15 sur les unes et d'un logement correspondant 16, tel qu'une rainure, sur les autres.

Les bossages 15 des pattes de verrouillage sont reçus dans les rainures 16 des pattes complémentaires quand les butées 11 des deux parties élémentaires sont en appui les unes sur les autres, c'est-à-dire quand l'une des parties élémentaires 7 a pivoté de 90° par rapport à l'autre autour de la charnière entre elles. Leur verrouillage intervient dans cette position de pivotement à 90° et fait que cette position est stable. Il suffit de forcer le retrait des bossages 15 hors des rainures 16, pour autoriser le pivotement en sens inverse.

La partie supplémentaire tronquée 8 est semblable aux parties élémentaires 7, sauf qu'elle est sans pattes terminales de rétention d'un module et sans pattes de verrouillage. Elle est prévue pour s'encastrer totalement dans la partie élémentaire 7 terminale d'un autre support modulaire. Elle présente des plots saillants 18 dont le relief et la longueur sont tronqués par rapport aux butées 11 pour s'y encastrer par la face d'assemblage de la partie élémentaire terminale concernée. Cette partie élémentaire présente en outre des échancrures 19 prévues sur le pied de ses butées 11 du côté de l'extrémité du support modulaire et situées en regard des charnières 9 liées à la partie supplémentaire tronquée 8. En outre, des nervures 20 sont prévues intérieurement dans la face d'assemblage. Elles constituent des légers obstacles à l'encastrement de la partie supplémentaire tronquée dans la partie élémentaire, comme à son retrait de celle-ci.

Le verrouillage des supports modulaires assemblés 5 est assuré par le montage de l'un des modules sur la partie élémentaire dans laquelle est encastrée la partie supplémentaire tronquée. Les supports modulaires ainsi assemblés et verrouillés sont alors tout à fait équivalents à un support unique continu. Les charnières 9 situées entre la partie supplémentaire tronquée et la partie élémentaire adjacente constituent les charnières entre cette partie élémentaire et celle terminale de l'autre support modulaire assemblé sur le premier.

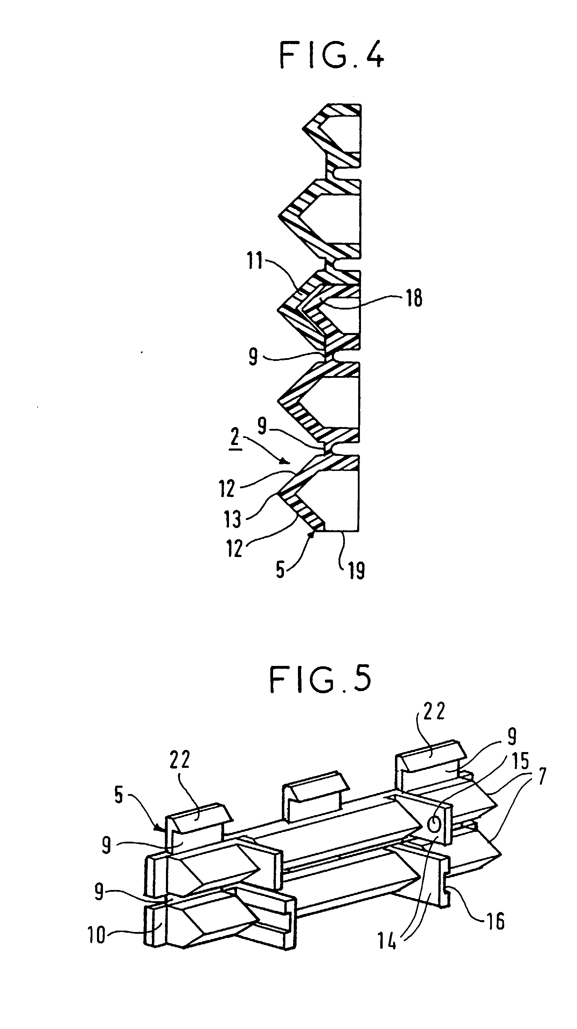

La figure 5 représente une variante de réalisation du support modulaire 5. La différence essentielle porte sur la partie supplémentaire tronquée, qui est divisée en dents individuelles 22. Ces dents prolongent les charnières individuelles 9 qui sont solidaires de la partie élémentaire 7 adjacente. Leur extrémité est analogue à un demi-plot tel que l'un des plots 18 précités. Les dents 22 sont pareillement retenues coincées à l'intérieur des butées 11 de la partie élémentaire terminale d'un autre support modulaire par les nervures 20 précitées. Elles sont verrouillées en place par le module monté sur cette partie élémentaire terminale.

L'avantage de ces supports modulaires 5 ainsi assemblables est qu'une fois assemblés ils sont équivalents à un support unique d'un seul tenant mais de longueur adaptable au nombre de modules de l'ensemble.

En variante par rapport aux réalisations des figures 2 et 3 ou de la figure 5, on note que les supports modulaires 5 peuvent ne comporter qu'une seule partie élémentaire 7 ou peuvent comporter trois parties élémentaires 7 ou plus. Elles comportent par contre comme précédemment chacune une partie supplémentaire tronquée encastrable dans la partie élémentaire terminale d'un autre support modulaire. L'avantage que présente les supports modulaires ayant un nombre pair de parties élémentaires 7 est que ceux-ci sont tous identiques, y compris pour le verrouillage en position de pivotement maximal possible obtenu par les paires de pattes complémentaires telles que 14 prévues à cet effet.

## Revendications

1. Ensemble modulaire de modules plats empilés et articulés, comportant n modules sensiblement identiques (1) et un support (2) de maintien et d'articulation desdits modules, dans lequel le nombre n est un nombre entier supérieur à 1, lesdits modules présentent deux grandes faces d'empilage et des petites faces périphériques et comportent des moyens de rétention (3) prévus sur une première de leurs petites faces, et ledit support (2) présente une longueur au moins égale à la hauteur desdits modules empilés et comporte des parties élémentaires (7) successives et superposées non jointivement, des charnières (9) entre elles, des deuxièmes moyens de rétention (10) complémentaires dits premiers moyens et prévus sur chacune d'elles, pour le maintien de l'un des modules sur une face dite d'assemblage de chaque partie élémentaires, et des butées (11) saillantes sur la face opposée à celle d'assemblage des parties élémentaires, caractérisé en ce que ledit support (2) est constitué par au moins un support modulaire (5) comportant l'une desdites parties élémentaires (7) à une première de ses extrémités et une partie supplémentaire et dite tronquée (8) à sa deuxième extrémité opposée, ladite partie supplémentaire tronquée (8) étant encastrable dans la partie élémentaire (7) de ladite première extrémité d'un autre support modulaire identique (5).

2. Ensemble selon la revendication 1, caractérisé en ce que les butées (11) sur ladite partie élémentaire (7) de ladite première extrémité de chaque support modulaire (5) sont creuses intérieurement et sont ouvertes sur la face d'assemblage de cette partie élémentaire.

3. Ensemble selon la revendication 2, caractérisé en ce qu'il comporte des ouvertures latérales (19) sur les butées (11) situées le long de ladite première extrémité.

4. Ensemble selon l'une des revendications 2 et 3, caractérisé en ce que lesdites charnières (9) sont discontinues.

5. Ensemble selon l'une des revendications 1 à 4, caractérisé en ce que la partie supplémentaire tronquée (8) de chaque support modulaire (5) comporte des plots saillants (18) analogues auxdites butées (11) sur chaque partie élémentaire, mais prévues moins en relief et moins longues que celles-ci.

6. Ensemble selon la revendication 5, caractérisé en ce que ladite partie supplémentaire tronquée (8) est discontinue le long de la partie élémentaire adjacente (7) du support modulaire (5) et est divisée en dents individuelles (22) définissant lesdits plots saillants (18).

7. Ensemble selon l'une des revendications 5 et 6, caractérisé en ce que lesdites butées (11) comportent des nervures intérieures (20) de rétention par coincement de la partie supplémentaire tronquée (8) dans la partie élémentaire située à la première extrémité de l'autre support modulaire.

8. Ensemble selon la revendication 7, caractérisé en ce qu'il comporte un élément de verrouillage de la partie supplémentaire tronquée (8) dans la partie élémentaire (7) de l'autre support modulaire (5), ledit élément étant l'un desdits modules (1) maintenu sur la face d'assemblage de cette partie élémentaire.

9. Ensemble selon l'une des revendications 1 à 8, caractérisé en ce que les butées (11) sont délimitées par des pans (12) inclinés à 45° sensiblement et sécants selon une arête (13) parallèle aux charnières (9) et sont associés à des moyens de verrouillage de chaque partie élémentaire. 10/ Ensemble selon l'une des revendications 1 à 9, caractérisé en ce que chaque support modulaire (5) présente un nombre pair de parties élémentaires successives (7), ce nombre pair étant en particulier 2.
